# EUROPÄISCHE PATENTSCHRIFT

(11) **EP 3 351 074 B1**
(45) Veröffentlichungstag und Bekanntmachung des Hinweises auf die Patenterteilung: **10.08.2022**
(21) Anmeldenummer: 18152577.5
(22) Anmeldetag: 19.01.2018
(51) Int. Cl.: A01B 59/06, A01B 59/043

(54) **ANBAUGERÄT MIT EINER ANBAUVORRICHTUNG UND GESPANN AUS DEM ANBAUGERÄT UND EINEM FAHRZEUG**
TRAILER WITH A ADD-ON DEVICE AND COMBINATION OF THE TRAILER AND A VEHICLE
ÉLÉMENT RAPPORTÉ AVEC DISPOSITIF D'ACCOUPLEMENT ET ATTELAGE COMPOSÉ DE L'ÉLÉMENT RAPPORTÉ ET D'UN VÉHICULE

(30) Priorität: 24.01.2017 DE 102017101281
(43) Veröffentlichungstag der Anmeldung: 25.07.2018
(73) Patentinhaber: CLAAS Saulgau GmbH, 88348 Bad Saulgau (DE)
(72) Erfinder: Epp, Siegfried, 88436 Eberhardzell (DE); Fuchs, Stefan, 88263 Horgenzell (DE)

(56) Entgegenhaltungen:
- DE-B- 1 191 619
- DE-B- 1 263 379
- FR-A5- 2 117 159
- KR-A- 20100 062 505

## Beschreibung

Die Erfindung betrifft ein landwirtschaftliches Anbaugerät mit einer Anbauvorrichtung und ein Gespann aus einem landwirtschaftlichen Anbaugerät und einem landwirtschaftlichen Fahrzeug.

Aus der Praxis sind Gespanne aus einem landwirtschaftlichen Fahrzeug und aus einem landwirtschaftlichen Anbaugerät bekannt, wobei das Anbaugerät entweder an ein Vorderteil oder ein Hinterteil des Fahrzeugs angebunden ist. Zur Anbindung des Anbaugeräts an das Fahrzeug weist das Fahrzeug eine Koppeleinrichtung auf, wobei bei aus der Praxis bekannten Fahrzeugen die Koppeleinrichtung zur Anbindung des Anbaugeräts an das Fahrzeug als Dreipunktkoppeleinrichtung ausgebildet ist. Eine Dreipunktkoppeleinrichtung verfügt über drei Lenker, insbesondere einen oberen Lenker und zwei untere Lenker, wobei diese Lenker mit einem ersten Ende gelenkig an das Fahrzeug angebunden sind, und wobei an einem gegenüberliegenden zweiten Enden der Lenker das Anbaugerät angebunden werden kann, nämlich über eine Anbauvorrichtung des Anbaugeräts. Bei aus der Praxis bekannten Anbaugeräten sind die Anbauvorrichtungen derselben entweder darauf ausgelegt, das Anbaugerät direkt an die Lenker der Dreipunktkoppeleinrichtung des Fahrzeugs anzubinden, oder alternativ darauf ausgelegt, um das Anbaugerät indirekt an die Lenker der Dreipunktkoppeleinrichtung anzubinden, nämlich über einen an den Lenkern montierten Schnellkuppelrahmen des Fahrzeugs. Ein solcher Schnellkuppelrahmen wird auch als Schnellkuppeldreieck oder Dreieckskupplung oder Schlepperdreieck oder Dreiecks-Schnellkupplung bezeichnet. Verfügt demnach ein landwirtschaftliches Anbaugerät über eine Anbauvorrichtung zur direkten Ankopplung des Anbaugeräts an die Lenker der Dreipunktkoppeleinrichtung des landwirtschaftlichen Fahrzeugs, so ist es nicht möglich, das landwirtschaftliche Anbaugerät über diese Anbauvorrichtung an einen Schnellkuppelrahmen des landwirtschaftlichen Fahrzeugs anzubinden.

Es besteht daher Bedarf an einer Anbauvorrichtung eines Anbaugeräts, mit der das Anbaugerät einfach auf unterschiedliche Varianten an das Fahrzeug angebunden werden kann.

Aus dem Dokument KR 2010 0062505 A ist ein landwirtschaftliches Anbaugerät bekannt, welches über ein Schnellkoppeldreieck an ein landwirtschaftliches Fahrzeug koppelbar ist.

Aus DE 12 63 379 B ist es bekannt, die Schnellanschlüsse des Dreipunktgestänges des Traktors und die Schnellanschlüsse eines Schnellkupplerrahmens identisch auszuführen, so dass die Koppel eines Anbaugerätes sowohl am Dreipunktgestänge des Traktors als auch am Schnellkupplerrahmen passen.

Das Dokument FR 2 117 159 A5 offenbart Ballastgewichte, die sowohl Anschlüsse für das Dreipunktgestänge des Traktors als auch eine Aufnahme für ein Schnellkuppeldreieck aufweisen.

Hiervon ausgehend liegt der vorliegenden Erfindung die Aufgabe zugrunde, ein landwirtschaftliches Anbaugerät mit einer neuartigen Anbauvorrichtung und ein Gespann aus dem landwirtschaftlichen Anbaugerät und einem landwirtschaftlichen Fahrzeug zu schaffen.

Diese Aufgabe wird durch eine Anbauvorrichtung eines landwirtschaftlichen Anbaugeräts nach Anspruch 1 gelöst.

Die erfindungsgemäße Anbauvorrichtung umfasst erste Aufnahmen, die in einer ersten Anbauart des Anbaugeräts an das Fahrzeug zur direkten Kopplung des landwirtschaftlichen Anbaugeräts an Lenker einer als Dreipunktkoppeleinrichtung ausgebildeten Koppeleinrichtung des landwirtschaftlichen Fahrzeugs ausgebildet sind. Ferner umfasst die erfindungsgemäße Anbauvorrichtung eine zweite Aufnahme, die in einer zweiten Anbauart des Anbaugeräts an das Fahrzeug zur indirekten Kopplung des landwirtschaftlichen Anbaugeräts an die Lenker der als Dreipunktkoppeleinrichtung ausgebildeten Koppeleinrichtung des landwirtschaftlichen Fahrzeugs ausgebildet ist, nämlich über einen an den Lenkern der Dreipunktkoppeleinrichtung montierten Schnellkuppelrahmen des landwirtschaftlichen Fahrzeugs.

Die erfindungsgemäße Anbauvorrichtung eines landwirtschaftlichen Anbaugeräts verfügt über unterschiedliche Aufnahmen. Erste Aufnahmen dienen der direkten Kopplung des landwirtschaftlichen Anbaugeräts an die Lenker der Dreipunktkoppeleinrichtung des landwirtschaftlichen Fahrzeugs. Eine zweite Aufnahme dient der indirekten Kopplung des landwirtschaftlichen Anbaugeräts an die Dreipunktkoppeleinrichtung, nämlich über einen an den Lenkern der Dreipunktkoppeleinrichtung montierten Schnellkuppelrahmen. Die Erfindung ermöglicht es, ein landwirtschaftliches Anbaugerät einfach auf unterschiedliche Varianten an das landwirtschaftliche Fahrzeug anzubinden.

Nach einer Weiterbildung sind die ersten Aufnahmen und die zweite Aufnahme derart ausgebildet, dass in der ersten Anbauart ein in Längsrichtung gesehener Abstand des Anbaugeräts vom Fahrzeug von einem entsprechenden Abstand in der zweiten Anbauart um maximal 150 mm abweicht. Nach einer Weiterbildung weicht in der ersten Anbauart ein in Hochrichtung gesehener Abstand der ersten Aufnahmen des Anbaugeräts von fahrzeugseitigen Enden der Lenker der Dreipunktkoppeleinrichtung von einem entsprechenden Abstand in der zweiten Anbauart um maximal 100 mm ab. Diese Ausführung ist besonders bevorzugt. Die Relativposition des Anbaugeräts zum Fahrzeug ist in beiden Anbauarten nahezu identisch. In Längsrichtung gesehen beträgt der Unterschied in den Positionen der Anbauarten maximal 150 mm, in einer senkrecht hierzu verlaufenden Hochrichtung maximal 100 mm. Dies ermöglicht in beiden Anbauarten mit ein und derselben Anbauvorrichtung eine optimale Position des Anhängegeräts am Fahrzeug, und zwar sowohl im Hinblick auf abhängig vom Gewicht des Anhängegeräts auf die Dreipunktkoppeleinrichtung wirkenden Kräften bzw. Momenten, sowie andererseits im Hinblick auf die Funktionalität des Anbaugeräts. Ferner werden definierte Abstände zwischen den Lenkern der Dreipunktkoppeleinrichtung unter Gewährleistung einer ordnungsgemäßen Aushubgeometrie eingehalten.

Gemäß der Erfindung stehen die ersten Aufnahmen gegenüber der zweiten Aufnahme in Längsrichtung gesehen in Richtung auf das Fahrzeug vor. Dies ist für die oben beschriebene Bereitstellung der Relativposition des Anbaugeräts zum Fahrzeug in beiden Anbauarten von Vorteil.

Gemäß der Erfindung weist die zweite Aufnahme einen Rahmen aus Holmen auf, die eine V-förmige oder dreieckartige Kontur für den Schnellkuppelrahmen des Fahrzeugs aufspannen, wobei die ersten Aufnahmen als laschenartige Vorsprünge an den Holmen der zweiten Aufnahme ausgebildet sind. Diese konstruktive Ausführung ist einfach und zuverlässig.

Die beiden Aufnahmen einer erfindungsgemäßen Anbauvorrichtung entsprechen vorzugsweise den relevanten Normen für Anbaugeometrien der Land- und Forstwirtschaft.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigen:
- Fig. 1: einen Ausschnitt eines Gespanns aus einem landwirtschaftlichen Anbaugerät mit einer erfindungsgemäßen Anbauvorrichtung und einem Fahrzeug in einer ersten Anbauart des Anbaugeräts;
- Fig. 2: einen Ausschnitt eines Gespanns aus einem landwirtschaftlichen Anbaugerät mit einer erfindungsgemäßen Anbauvorrichtung und einem Fahrzeug in einer zweiten Anbauart des Anbaugeräts; und
- Fig. 3: den Ausschnitt der Fig. 2 in entkoppeltem Zustand von Anbaugerät und Fahrzeug.

Die Erfindung betrifft ein landwirtschaftliches Anbaugerät mit einer Anbauvorrichtung und ein Gespann aus dem landwirtschaftlichen Anbaugerät und einem landwirtschaftlichen Fahrzeug.

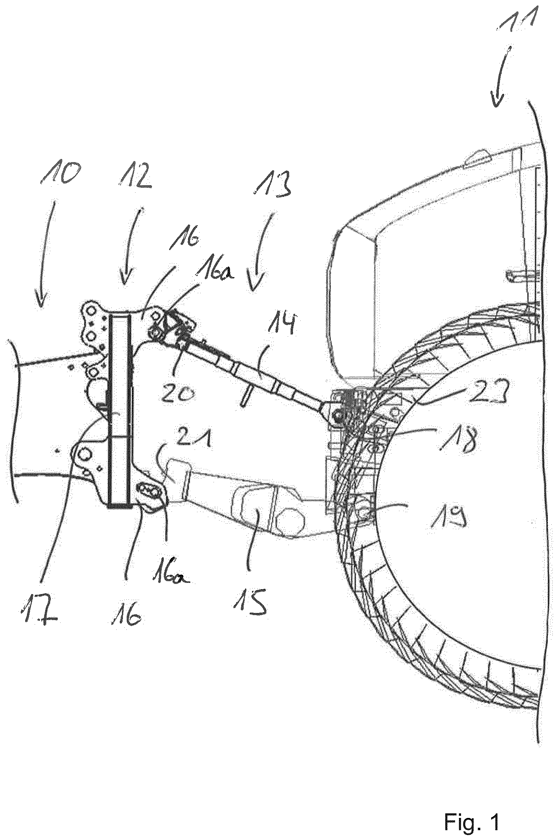

Fig. 1 bis 3 zeigen jeweils einen Ausschnitt aus einem Gespann eines landwirtschaftlichen Anbaugeräts 10 und eines landwirtschaftlichen Fahrzeugs 11. Das landwirtschaftliche Anbaugerät 10 verfügt über eine erfindungsgemäße Anbauvorrichtung 12, über die das Anbaugerät 10 an eine als Dreipunktkoppeleinrichtung 13 ausgebildete Koppeleinrichtung des landwirtschaftlichen Fahrzeugs 11 angebunden bzw. angebaut werden kann. Die Dreipunktkoppeleinrichtung 13 des Fahrzeugs 11 verfügt über mehrere Lenker, nämlich über einen oberen Lenker 14 und zwei untere Lenker 15, wobei erste fahrzeugseitige Enden 18, 19 dieser Lenker 14, 15 an eine Tragstruktur 23 des landwirtschaftlichen Fahrzeugs 11 gelenkig angebunden sind, und wobei gegenüberliegende, zweiten anbaugerätseitige Enden 20, 21 dieser Lenker 14, 15 der Anbindung des Anbaugeräts 10 über die Anbauvorrichtung 12 an die Dreipunktkopplungseinrichtung 13 dienen.

Die Anbauvorrichtung 12 verfügt über erste Aufnahmen 16, die in einer ersten Anbauart (siehe Fig. 1) des Anbaugeräts 10 an das Fahrzeug 11 zur direkten Kopplung des landwirtschaftlichen Anbaugeräts 10, nämlich der Anbauvorrichtung 12 desselben, an die Lenker 14, 15 der Dreipunktkoppeleinrichtung 13 des landwirtschaftlichen Fahrzeugs 11 ausgebildet sind, nämlich an die anbaugerätseitigen Enden 20, 21 dieser Lenker 14, 15.

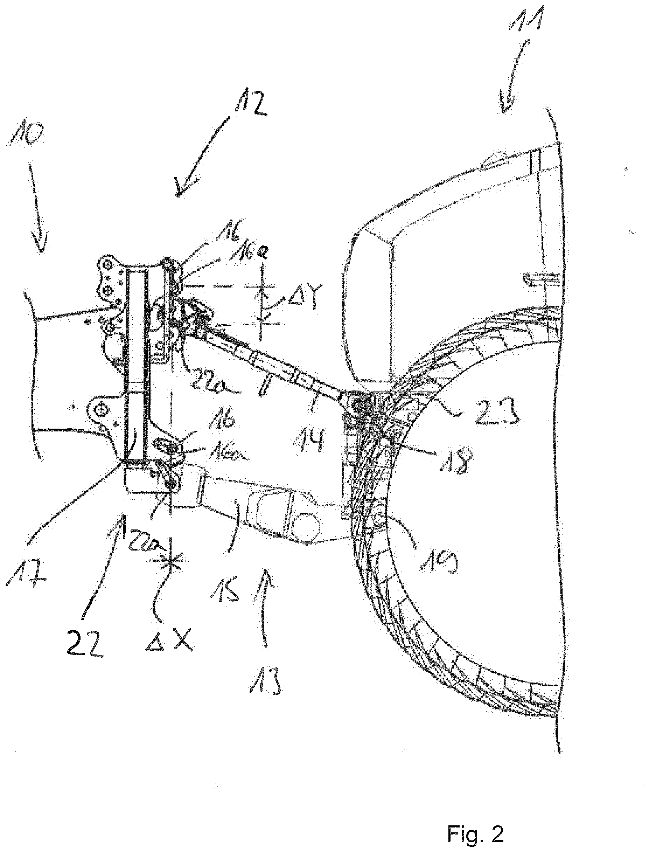

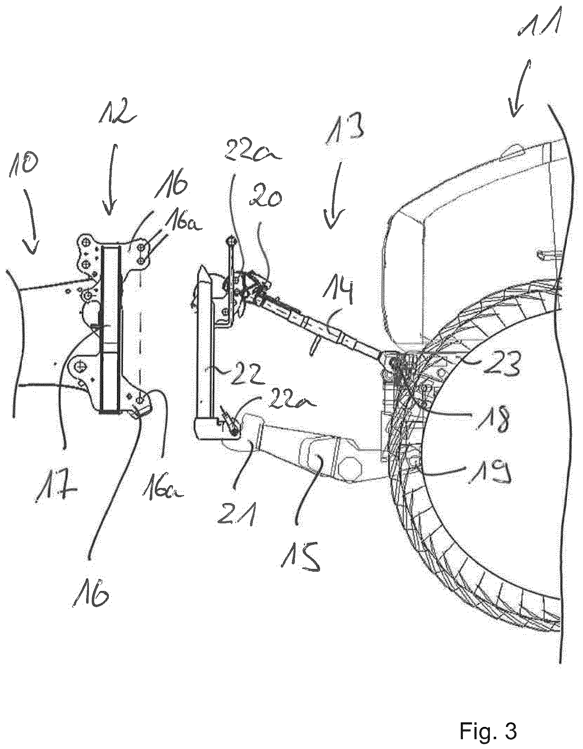

Ferner umfasst die Anbauvorrichtung 12 eine zweite Aufnahme 17, die in einer zweiten Anbauart (siehe Fig. 2) des Anbaugeräts 10 an das Fahrzeug 11 zur indirekten Kopplung des landwirtschaftlichen Anbaugeräts 10, nämlich der Anbauvorrichtung 12 desselben, an die Lenker 14, 15 der Dreipunktkoppeleinrichtung 13 des Fahrzeugs 11 ausgebildet ist, nämlich über einen an den anbaugerätseitigen Enden 20, 21 dieser Lenker 14, 15 Enden 20, 21 der Lenker 14, 15 montierten Schnellkuppelrahmen 22 des landwirtschaftlichen Fahrzeugs 11. Dieser Schnellkuppelrahmen 22 des landwirtschaftlichen Fahrzeugs 11 ist insbesondere im entkoppelten Zustand von Anbaugerät 10 und Fahrzeug 11 in Fig. 3 sichtbar.

Fig. 1 zeigt demnach das Gespann aus Anbaugerät 10 und Fahrzeug 11 in der ersten Anbauart. Fig. 2 zeigt das Gespann in der zweiten Anbauart. Fig. 3 zeigt dasselbe im entkoppelten Zustand der zweiten Anbauart.

Die ersten Aufnahmen 16 für die erste Anbauart und die zweite Aufnahme 17 für die zweite Anbauart sind derart ausgebildet, dass in der ersten Anbauart ein in Längsrichtung gesehener Abstand des Anbaugeräts 10 vom Fahrzeug 11 von einem entsprechenden Abstand des Anbaugeräts 10 vom Fahrzeug 11 in der zweiten Anbauart um einen Betrag ΔX von maximal 150 mm abweicht, und dass in der ersten Anbauart ein in Hochrichtung gesehener Abstand der ersten Aufnahmen 16 des Anbaugeräts 10 von den fahrzeugseitigen Enden 18, 19 der Lenker 14, 15 der Dreipunktkoppeleinrichtung 13 von einem entsprechenden Abstand in der zweiten Anbauart um einen Betrag ΔY von maximal 100 mm abweicht.

Im gezeigten Ausführungsbeispiel (siehe Fig. 2) ist in beiden Anbauarten ein in Längsrichtung gesehener Abstand des Anbaugeräts 10 vom Fahrzeug 11 gleich oder in etwa gleich, sodass der Abstand ΔX Null oder in etwa Null beträgt.

Die zweite Aufnahme 17 der Anbauvorrichtung 12, die dem Anbau des Anhängegeräts 10 über die Anbauvorrichtung 12 an dem Schnellkuppelrahmen 22 des Fahrzeugs 11 dient, verfügt über einen Rahmen aus Holmen, die eine V-förmige oder dreieckartige Kontur für den Schnellkuppelrahmen 22 des Fahrzeugs aufspannen, wobei dieser Rahmen der zweiten Aufnahme 17 nach unten offen ausgebildet ist.

Die ersten Aufnahmen 16 zur direkten Anbindung der Anbauvorrichtung 12 an die Lenker 14, 15 ohne Schnellkuppelrahmen 11 sind als laschenartige Vorsprünge an den Holmen der zweiten Aufnahme 17 ausgebildet, die gegenüber den Holmen der zweiten Aufnahme 17, in Längsrichtung gesehen, in Richtung auf das Fahrzeug 11 vorstehen.

Die als laschenartigen Vorsprünge ausgebildeten ersten Aufnahmen 16, die der direkten Kopplung des Anbaugeräts 10 an die Lenker 14, 15 der Dreipunktkoppeleinrichtung 13 dienen, stellen Ankopplungspunkte 16a für die zweiten anbaugerätseitigen Enden 20, 21 der Lenker 14, 15 der Dreipunktkoppeleinrichtung 13 bereit.

Ebenso stellt der Schnellkuppelrahmen 22 des Fahrzeugs 11 derartige Anbindungspunkte 22a bereit, über die der Schnellkuppelrahmen 22 an den zweiten anbaugerätseitigen Enden 20, 21 der Lenker 14, 15 der Dreipunktkoppeleinrichtung 13 angebunden werden kann.

Dann, wenn in der zweiten Anbauart (siehe Fig. 2) das Anbaugerät 10 über die Anbauvorrichtung 12, nämlich über die zweite Aufnahme 17 derselben, an den Schnellkuppelrahmen 22 des Fahrzeugs 11 angebunden ist, liegen die Anbindungspunkte 16a und die Anbindungspunkte 22a auf einer sich in Hochrichtung erstreckenden Achse. In diesem Fall ist dann, wie bereits ausgeführt, der vertikale Unterschied in der Relativposition zwischen Anbaugerät 10 und Fahrzeug 11 in beiden Anbauarten gleich Null. Der vertikale Versatz ΔY des Anbaugeräts 10 in den beiden Anbaupositionen entspricht dem Abstand der Anbindungspunkte 16a, 22a auf dieser sich in Hochrichtung erstreckenden Achse, wobei dieser Versatz in Fig. 2 durch ΔY gekennzeichnet ist.

Bei dem Anbaugerät 10 kann es sich um ein Mähwerk oder einen Schneepflug oder einen Siloverteiler oder ein Siloschiebeschild oder einen Fronttank oder dergleichen handeln, also um ein Anbaugerät, das vorzugsweise an die Koppeleinrichtung 13 des Fahrzeugs 11 angebunden wird, die ihrerseits am Vorderteil des landwirtschaftlichen Fahrzeugs 11 montiert ist.

Mit der erfindungsgemäßen Anbauvorrichtung kann ein Anbaugerät 10 einfach und zuverlässig in unterschiedlichen Anbauarten an eine Dreipunktkoppeleinrichtung 13 eines landwirtschaftlichen Fahrzeugs 11 angebunden werden, und zwar bei gleichen oder annähernd gleichen Relativpositionen des Anhängegeräts 10 zum Fahrzeug 11 in Längsrichtung sowie in Hochrichtung gesehen.

### Bezugszeichenliste

- 10: Anbaugerät
- 11: Fahrzeug
- 12: Anbauvorrichtung
- 13: Dreipunktkoppeleinrichtung
- 14: Lenker
- 15: Lenker
- 16: erste Aufnahme
- 16a: Ankopplungspunkt
- 17: zweite Aufnahme
- 18: Ende
- 19: Ende
- 20: Ende
- 21: Ende
- 22: Schnellkuppelrahmen
- 22a: Ankopplungspunkt
- 23: Tragstruktur

## Patentansprüche

1. Landwirtschaftliches Anbaugerät (10) mit einer Anbauvorrichtung (12), die geeignet ist das landwirtschaftliche Anbaugerät (10) an eine Koppeleinrichtung eines landwirtschaftlichen Fahrzeugs (11) anzukoppeln,
mit ersten Aufnahmen (16), die zur direkten Kopplung des Anbaugeräts (10) an Lenker (14, 15) einer als Dreipunktkoppeleinrichtung (13) ausgebildeten Koppeleinrichtung des Fahrzeugs (11) geeignet sind,
mit einer zweiten Aufnahme (17),
die einen Rahmen aus Holmen aufweist, die eine V-förmige oder dreieckartige Kontur für einen Schnellkuppelrahmen (22) des Fahrzeugs (11) aufspannen, und
die zur indirekten Kopplung des Anbaugeräts (10) an die Lenker (14, 15) der als Dreipunktkoppeleinrichtung (13) ausgebildeten Koppeleinrichtung des Fahrzeugs (11) geeignet ist, nämlich über einen an den Lenkern (14, 15) montierten Schnellkuppelrahmen (22) des landwirtschaftlichen Fahrzeugs (11),
wobei die ersten Aufnahmen (16) als laschenartige Vorsprünge an den Holmen der zweiten Aufnahme (17) ausgebildet sind ,
**dadurch gekennzeichnet, dass** die ersten Aufnahmen gegenüber der zweiten Aufnahme (17) in Fahrtrichtung gesehen in Richtung auf das Fahrzeug (11) vorstehen.

2. Anbaugerät (10) nach Anspruch 1, **dadurch gekennzeichnet, dass** die ersten Aufnahmen (16) und die zweite Aufnahme (17) derart ausgebildet sind, dass bei direkter oder indirekter Kopplung ein jeweiliger in Fahrtrichtung gesehener Abstand (ΔX) des Anbaugeräts (10) vom Fahrzeug (11) gleich oder in etwa gleich ist , oder dass bei direkter Kopplung ein in Fahrtrichtung gesehener Abstand des Anbaugeräts (10) vom Fahrzeug (11) von einem entsprechenden Abstand bei indirekter Kopplung um maximal 150 mm abweicht.

3. Anbaugerät (10) nach einem der Ansprüche 1 oder 2, **dadurch gekennzeichnet, dass** die ersten Aufnahmen (16) und die zweite Aufnahme (17) derart ausgebildet sind, dass bei direkter Kopplung ein in Hochrichtung gesehener Abstand (ΔY) der ersten Aufnahmen (16) des Anbaugeräts (10) von fahrzeugseitigen Enden (18, 19) der Lenker (14, 15) der Dreipunktkoppeleinrichtung (13) von einem entsprechenden Abstand (ΔY) bei indirekter Kopplung um maximal 100 mm abweicht.

4. Anbaugerät (10) nach Anspruch 1, **dadurch gekennzeichnet, dass** bei indirekter Kopplung Ankopplungspunkte (22a) des Schnellkuppelrahmens (22) für anbaugerätseitige Enden (20, 21) der Lenker (14, 15) der Dreipunktkoppeleinrichtung (13) zusammen mit von den laschenartigen Vorsprüngen bereitgestellten Ankopplungspunkten (16a) der ersten Aufnahmen (16) für die anbaugerätseitigen Enden (20, 21) der Lenker (14, 15) auf einer sich in Hochrichtung erstreckenden Achse liegen.

5. Anbaugerät nach Anspruch 1, **dadurch gekennzeichnet, dass** das Anbaugerät als Mähwerk oder als Schneepflug oder als Siloverteiler oder als Siloschiebschild oder als Fronttank ausgebildet ist.

6. Gespann aus einem landwirtschaftlichen Fahrzeug (11) und einem landwirtschaftlichen Anbaugerät (10) nach einem der vorangehenden Ansprüche.

7. Gespann nach Anspruch 6, **dadurch gekennzeichnet, dass** das Anbaugerät (10) über seine Anbauvorrichtung (12) an die Dreipunktkoppeleinrichtung (13) des landwirtschaftlichen Fahrzeugs (11) angebunden ist, die ihrerseits am Vorderteil des Fahrzeugs (11) montiert ist.

## Claims

1. Agricultural attachment (10) with an attachment device (12) which is suitable for coupling the agricultural attachment (10) to a coupler of an agricultural vehicle (11),
with first holders (16) which are suitable for directly coupling the attachment (10) to links (14, 15) of a coupler, embodied as a three-point coupler (13), of the vehicle (11),
with a second holder (17) which has a frame made from struts which span a V-shaped or triangular contour for a quick-coupling frame (22) of the vehicle (11), and which holder is suitable for indirectly coupling the attachment (10) to the links (14, 15) of the coupler, embodied as a three-point coupler (13), of the vehicle (11), namely via a quick-coupling frame (22), which is mounted on the links (14, 15), of the agricultural vehicle (11), wherein the first holders (16) are designed as tab-like protrusions on the struts of the second holder (17) ,
**characterized in that** the first holders protrude in relation to the second holder (17) in the direction of the vehicle (11), as seen in the direction of travel.

2. Attachment (10) according to Claim 1, **characterized in that** the first holders (16) and the second holder (17) are designed in such a manner that, in the event of direct or indirect coupling, a respective distance (ΔX) of the attachment (10) from the vehicle (11), as seen in the direction of travel, is identical or approximately identical, or **in that**, in the event of direct coupling, a distance of the attachment (10) from the vehicle (11), as seen in the direction of travel, deviates from a corresponding distance in the event of indirect coupling by a maximum of 150 mm.

3. Attachment (10) according to either of Claims 1 and 2, **characterized in that** the first holders (16) and the second holder (17) are designed in such a manner that, in the event of direct coupling, a distance (ΔY), as seen in the vertical direction, of the first holders (16) of the attachment (10) from vehicle-side ends (18, 19) of the links (14, 15) of the three-point coupler (13) deviates from a corresponding distance (ΔY), in the event of indirect coupling, by a maximum of 100 mm.

4. Attachment (10) according to Claim 1, **characterized in that,** in the event of indirect coupling, coupling points (22a) of the quick-coupling frame (22) for attachment-side ends (20, 21) of the links (14, 15) of the three-point coupler (13) together with coupling points (16a), provided by the tab-like protrusions, of the first holders (16) for the attachment-side ends (20, 21) of the links (14, 15) lie on an axis extending in the vertical direction.

5. Attachment according to Claim 1, **characterized in that** the attachment is designed as a mower or as a snow plough or as a silo distributor or as a silo plough share or as a front tank.

6. Combination of an agricultural vehicle (11) and an agricultural attachment (10) according to one of the preceding claims.

7. Combination according to Claim 6, **characterized in that** the attachment (10) is connected via its attachment device (12) to the three-point coupler (13) of the agricultural vehicle (11), the three-point coupler for its part being mounted on the front part of the vehicle (11).

## Revendications

1. Outil porté agricole (10), comprenant un relevage (12) qui est adapté pour atteler l'outil porté agricole (10) à un dispositif d'attelage d'un véhicule agricole
(11), comprenant des premiers logements (16) qui sont adaptés pour l'attelage direct de l'outil porté (10) à des bras de relevage (14, 15) d'un dispositif d'attelage du véhicule (11), réalisé sous forme de dispositif d'attelage trois points (13),
comprenant un deuxième logement (17) qui présente un cadre composé de longerons qui réalisent un contour en forme de V ou de type triangulaire pour un cadre d'attelage rapide (22) du véhicule (11), et qui est adapté pour l'attelage indirect de l'outil porté (10) aux bras de relevage (14, 15) du dispositif d'attelage du véhicule (11) réalisé sous forme de dispositif d'attelage trois points (13), notamment par l'intermédiaire d'un cadre d'attelage rapide (22) du véhicule agricole (11), monté sur les bras de relevage (14, 15), dans lequel les premiers logements (16) sont réalisés sous la forme de saillies de type patte sur les longerons du deuxième logement (17),
**caractérisé en ce que** les premiers logements, vus dans le sens de la marche, dépassent par rapport au deuxième logement (17) en direction du véhicule (11).

2. Outil porté (10) selon la revendication 1, **caractérisé en ce que** les premiers logements (16) et le deuxième logement (17) sont réalisés de telle sorte qu'une distance (ΔX) respective entre l'outil porté (10) et le véhicule (11), vue dans le sens de la marche, est identique ou approximativement identique en cas d'attelage direct ou indirect, ou **en ce qu'**en cas d'attelage direct, une distance entre l'outil porté (10) et le véhicule (11), vue dans le sens de la marche, est différente au maximum de 150 mm d'une distance correspondante en cas d'attelage indirect.

3. Outil porté (10) selon l'une quelconque des revendications 1 ou 2, **caractérisé en ce que** les premiers logements (16) et le deuxième logement (17) sont réalisés de telle sorte qu'en cas d'attelage direct, une distance (ΔY), vue dans la direction verticale, entre les premiers logements (16) de l'outil porté (10) et des extrémités côté véhicule (18, 19) des bras de relevage (14, 15) du dispositif d'attelage trois points (13) est différente au maximum de 100 mm d'une distance (ΔY) correspondante en cas d'attelage indirect.

4. Outil porté (10) selon la revendication 1, **caractérisé en ce qu'**en cas d'attelage indirect, les points d'attelage (22a) du cadre d'attelage rapide (22) pour des extrémités côté outil porté (20, 21) des bras de relevage (14, 15) du dispositif d'attelage trois points (13) se trouvent ensemble avec des points d'attelage (16a) fournis par les saillies de type patte des premiers logements (16) pour les extrémités côté outil porté (20, 21) des bras de relevage (14, 15) sur un axe d'étendant dans la direction verticale.

5. Outil porté selon la revendication 1, **caractérisé en ce que** l'outil porté est réalisé sous forme de barre de coupe ou de chasse-neige ou d'épandeur d'ensilage ou de lame à ensilage ou de trémie frontale.

6. Ensemble attelé composé d'un véhicule agricole (11) et d'un outil porté agricole (10) selon l'une quelconque des revendications précédentes.

7. Ensemble attelé selon la revendication 6, **caractérisé en ce que** l'outil porté (10) est relié par l'intermédiaire de son relevage (12) au dispositif d'attelage trois points (13) du véhicule agricole (11) qui est monté à son tour sur la partie avant du véhicule (11) .
